# EUROPÄISCHE PATENTSCHRIFT

(11) **EP 3 917 326 B1**
(45) Veröffentlichungstag und Bekanntmachung des Hinweises auf die Patenterteilung: **07.06.2023**
(21) Anmeldenummer: 21721431.1
(22) Anmeldetag: 21.04.2021
(51) Int. Cl.: A23G 3/34, A23G 3/02, A23P 30/10

(54) **VERFAHREN ZUR HERSTELLUNG EINES DREIDIMENSIONALEN SÜSSWARENARTIKELS**
METHOD FOR PRODUCING A THREE-DIMENSIONAL CONFECTIONERY ITEM
PROCÉDÉ DE PRODUCTION D'UN ARTICLE DE CONFISERIE TRIDIMENSIONNEL

(30) Priorität: 22.04.2020 DE 102020110943
(43) Veröffentlichungstag der Anmeldung: 08.12.2021
(73) Patentinhaber: Winkler und Dünnebier Süsswarenmaschinen GmbH, 56579 Rengsdorf (DE)
(72) Erfinder: RUNKEL, Rainer, 56579 Rengsdorf (DE); BRACK, Holger, 55452 Rümmelsheim (DE)
(74) Vertreter: Lippert Stachow Patentanwälte Rechtsanwälte
(86) Internationale Anmeldenummer: PCT/EP2021/060319
(87) Internationale Veröffentlichungsnummer: WO 2021/214103

(56) Entgegenhaltungen:
- EP-A1- 0 736 257
- WO-A1-2018/203068
- DE-A1-102007 031 747
- DE-T2- 69 621 205

## Beschreibung

Die Erfindung betrifft ein Verfahren zur Herstellung eines dreidimensionalen Süßwarenartikels aus wenigstens einer Zuckermasse mittels einer Gießform, die aus wenigstens zwei Gießformteilen zusammensetzbar ist, wobei jedes Gießformteil mindestens je eine Teilkavität aufweist, mit der Maßgabe, dass sich die beiden Gießformteile in einen zusammengesetzten Zustand bringen lassen, in dem die beiden Teilkavitäten einen gemeinsamen Formhohlraum ergeben, der dem Süßwarenartikel seine dreidimensionale Gestalt verleiht, wobei die beiden Gießformteile in einer geöffneten Gießposition angeordnet werden, in der die Teilkavitäten nach oben offen angeordnet sind, dass in der Gießposition in beide Teilkavitäten der Gießformteile ein Anteil der Zuckermasse des Süßwarenartikels eingegossen wird, dass die beiden Gießformteile anschließend zusammengelegt und in eine geschlossene Transportlage gebracht werden, in der die Gießform horizontal angeordnet ist, wobei die Oberseite eines Gießformteils mit der Oberseite des anderen Gießformteils in Kontakt gelangt und die Teilkavitäten der beiden Gießformteile in Überdeckung gekommen sind und den gemeinsamen Formhohlraum bilden, wobei die Gießform als wiederverwendbare Dauerform ausgebildet ist.

Des Weiteren betrifft die Erfindung einen dreidimensionalen Süßwarenartikel, hergestellt mit dem vorgeschlagenen Verfahren.

Als dreidimensional werden Süßwarenartikel bezeichnet, die auf gegenüberliegenden Seiten, beispielsweise oben und unten mit Flächen versehen sind, die jeweils ein dreidimensionales Flächenprofil aufweisen.

Im Unterschied dazu werden als zweidimensional solche Süßwarenartikel bezeichnet, die nur auf einer Seite ein Flächenprofil, jedoch gegenüberliegend eine ebene Fläche aufweisen, beispielsweise ein tafelförmiger Süßwarenartikel, der in eine einteilige Gießform mit nach oben offener Kavität gegossen wird. In der Kavität stellt sich durch die Fließfähigkeit der gegossenen Süßwarenmasse eine ebene Oberfläche des Süßwarenartikels ein. Ein solcher Süßwarenartikel wird vereinfacht als "zweidimensional" bezeichnet.

Ein gattungsgemäßes Verfahren ist aus der EP 0 736 257 A1 bekannt, die eine Formungsstrecke zur Herstellung von Konditoreiprodukten betrifft, bei der eine geordnete Abfolge von ersten und zweiten Halbformen kontinuierlich von einer Fördereinrichtung entlang eines Weges P zugeführt wird, der sich durch eine Verschließstation erstreckt, wo die Halbformen geschlossen werden, um eine geordnete Folge von dauerhaften wiederverwendbaren Formen zu bilden. Dabei sind die Halbformen direkt und lösbar mit der Fördereinrichtung verbunden. Jede Form wird gebildet durch Lösen der jeweiligen ersten Halbform von der Fördereinrichtung, Wenden der jeweiligen ersten Halbform auf die jeweilige zweite Halbform bevor die Form die Verschließstation verlässt.

Ein weiterer Stand der Technik ist aus der WO 2018/203068_A1 bekannt, die eine Formanordnung betrifft, welche für die Herstellung von Lebensmittelprodukten geeignet ist. Die Anordnung umfasst: Zwei als Formteile bezeichnete Halbformen, die gelenkig miteinander verbunden sind, zwei starre längliche Elemente, wobei sich jeweils ein starres längliches Element durch eine jeweilige Halbform erstreckt, wobei eines der ersten starren länglichen Elemente so angebracht ist, dass es während eines Übergangs zwischen einem offenen Zustand der Formteile und einem geschlossenen Zustand der Formteile und umgekehrt im Wesentlichen eine Verschiebung desselben verhindert, und wobei das zweite starre längliche Element so angebracht ist, dass es während des Übergangs eine Verschiebungsbewegung desselben ermöglicht.

Aus der DE 696 21 205_T2 ist eine Wendevorrichtung für den Betrieb von Halbformen bekannt, die sich auf einem Montageband in abwechselnder Reihenfolge bewegen. Die Wendevorrichtung umfasst auf beiden Seiten des Montagebandes Wendeeinheit, die der Bewegung des Bandes selbst folgen können. Jede dieser Einheiten ist mit einem festen Element und einem beweglichen Element mit entsprechenden Betätigungsformationen versehen, die in der Lage sind, die Halbformen durch eine annähernde Bewegung hin an das Band zu ergreifen.

Die DE 10 2007 031 747_A1 schlägt ein Verfahren vor, um Hartbonbonmassen zu gießen, die sich in Formen aus nicht gummielastischem Kunststoff nur schwer entformen lassen. Bei dem vorgeschlagenen Verfahren, wird die Innenfläche der Formen mit einem Trennmittel benetzt und das Entformen erfolgt bevorzugt bei einer Temperatur von 45 bis 60°C.

Ein weiteres Verfahren ist aus der DE 40 04 688 A1 bekannt. Bei diesem Stand der Technik ist vorgesehen, die beiden Gießformteile als sogenannte Halbformen aus einer Folie auszubilden. Die Folie soll zweckmäßig tiefgezogen sein. Nach der Herstellung des Süßwarenartikels soll er in den zusammengelegten Folien verbleiben, die dann als Verpackung dienen. Zum Schließen dieser Gießform wird eine Halbform um 180° um eine Schwenkachse auf die andere Halbform geklappt, so dass beide mit ihren Oberseiten aufeinanderliegen und den Formhohlraum bilden. Die bekannten Gießformteile sind dünn und leicht ausgeführt, da sie nachträglich als Verpackungsfolie dienen müssen, womit eine schlechte Formstabilität der Gießformteile einhergeht. Die schlechte Formstabilität wirkt sich auf die Qualität der erwartbaren dreidimensionalen Form des Süßwarenartikels negativ aus. Wenn die Schwenkachse lediglich als eine Knicknut oder dergleichen in der Folie realisiert ist, wie vorschlagen, dann ist dies der Qualität der dreidimensionalen Form des Süßwarenartikels ebenfalls abträglich.

Des Weiteren ist ein anderes Verfahren zur Herstellung eines dreidimensionalen Süßwarenartikels aus EP 2 730 172 A1 bekannt. Dieses Verfahren arbeitet mittels einer dauerhaften Gießform aus zwei Gießformteilen mit Teilkavitäten. Hier müssen die Gießformteile jedoch zunächst zu einem leeren Formhohlraum zusammengelegt werden. Die Zuckermasse wird anschließend durch eine Einfüllöffnung in den Formhohlraum gegossen.

Der Erfindung liegt die Aufgabe zugrunde, ein gattungsgemäßes Verfahren zur Herstellung eines dreidimensionalen Süßwarenartikels aus Zuckermasse so weiterzuentwickeln, dass komplexe dreidimensionale Süßwarenartikel herzustellen, welche keinerlei Mängelstellen aufweisen.

Erfindungsgemäß wird die Aufgabe dadurch gelöst, dass die beiden Gießformteile der Dauerform nach dem Eingießen der Zuckermasse zunächst aus der geöffneten Gießposition in einem Zwischenschritt in eine geschlossene Zwischenposition bewegt werden, dass in der geschlossenen Zwischenposition die Teilkavitäten der beiden Gießformteile bereits in Überdeckung gebracht werden und der gemeinsame Formhohlraum gebildet wird, und dass die Gießform dann aus der geschlossenen Zwischenposition in einem zweiten Schritt bis in die horizontale Transportlage bewegt wird.

In der Transportlage liegt ein Gießformteil unten und ist in seine horizontale Ausgangslage zurückgelangt, während der zweite Gießformteil spiegelbildlich auf dem unten liegenden Gießformteil aufliegt.

Eine genaue Ausrichtung der beiden Gießformen geschieht während des Schließvorgangs durch ein Schließmittel einer geeigneten Vorrichtung zur Durchführung des vorgeschlagenen Verfahrens.

Ein entscheidender Vorteil wird erreicht durch die Kombination der Verwendung einer Dauerform sowie einer kontrollierten Bewegung beider Gießformteile in die Zwischenposition und in einem zweiten Schritt eine weitere Bewegung bis in die horizontale Transportlage. Günstig daran ist, dass zunächst, um die Zwischenposition zu erreichen, jeder der beiden Gießformteile einen Weg zurücklegt, der kürzer ist als die Schwenkbewegung, welche die aus dem Stand der Technik bekannte Folien-Halbform ausführen muss.

Mit dem neuen Verfahren können Süßwarenartikel mit komplexen dreidimensionalen Geometrien erzeugt werden, wie Tiere, Personen, Gebrauchsgegenstände, z. B. eine Glühbirne. Die Süßwarenartikel können daher asymmetrisch sein. Vorzugsweise ist für die Teilkavitäten der Gießform eine Trennung des Süßwarenartikels über seine Längsrichtung vorgesehen. Dies vereinfacht es, Süßwarenartikel herzustellen, die komplexe asymmetrische dreidimensionale Geometrien aufweisen.

Im Gegensatz zu dem bekannten Verfahren, bei dem Zuckermasse durch eine Einfüllöffnung in einen leeren Formhohlraum gegossen wird, kann mit dem vorgeschlagenen Verfahren ein vollständig geschlossener Formhohlraum erzeugt und eine vollständige dreidimensionale Formgebung des Süßwarenartikels erzielt werden. Dadurch weist der fertige Süßwarenartikel keine Einbuchtungen/Mängelstellen dort auf, wo das bekannte Verfahren aufgrund der Einfüllöffnung keine dreidimensionale Formgebung leisten kann. Stattdessen ist der Süßwarenartikel zu 100% allseitig vollständig dreidimensional geformt, ohne Fehler in seiner Dreidimensionalität.

Darüber hinaus weist der Süßwarenartikel eine dichte und feste Haftung zwischen den beiden Anteilen der Zuckermasse in den beiden Teilkavitäten auf. Beim Zusammenlegen der beiden Gießformteile kommen die Oberflächen der gegossenen Zuckermassenanteile in Kontakt miteinander und gehen eine rasche stoffliche Verbindung ein, die einen einstückigen Süßwarenartikel entstehen lässt. Die gute Verbindung der Zuckermassenanteile wirkt bereits beim Öffnen der Gießformteile einem Auseinanderreißen des Süßwarenartikels entgegen.

Die Zuckermasse kann aus den folgenden Bestandteilen zusammengesetzt sein:
Zucker: 25 - 75%, Glucosesirup: 25 - 75%, vorzugsweise ca. 50%; Wasser 5 - 30%, vorzugsweise 15 - 22%; ergänzend Grundrohstoffe wie z.B. Sorbit (0,1 - 10%), Invertzuckersirup (0,1 - 10%), Milchtrockenstoffe (0,1 - 10%), Fruchtkonzentrate oder Pürees (0,1 - 20%); Gelatine: Gelatine (150 - 300 Bloom) 2 - 20%, vorzugsweise 4 - 10%; Pektin: hoch und/oder niederverestert sowie amidiert, 1 - 10%, vorzugsweise 1,5 - 4%; Agar: (Kappa und/oder Iota-Qualität) 1 - 10%, vorzugsweise 1,5 - 4%; Carrageen: 1 - 10%, vorzugsweise 1,5 - 4%.

Vorteilhaft können für die Zuckermasse auch Gummiarabicum und Stärke sowie Mischungen in Kombination mit den Bindemitteln Gelatine, Pektin, Agar-Agar und Carrageen eingesetzt werden.

Des Weiteren sind als Bonbon-Zuckermassen einsetzbar: Zucker 25 - 75%, vorzugsweise ca. 50%, Glucosesirup 25 - 75%, vorzugsweise 50%, evtl. begleitend Grundrohstoffe (s.o.), Restwassergehalt von 0,5 bis 5%, vorzugsweise 1,5 - 3%.

Generell können die Bonbon-Zuckermassen anstelle des Zuckers und/ oder der Glucose auch zuckerfreie Rohstoffe umfassen (Isomalt, Maltit, Polydextrose, Xylit, etc.) - Einsatzmengen dieser Rohstoffe liegen zwischen 10 und 98%.

Darüber hinaus können Mischungen aus den genannten zuckerfreien Rohstoffen in Kombination mit der Bonbon-Zuckermasse eingesetzt werden. Als Basis wird eine Bonbon-Zuckermasse mit reduziertem Anteil Zucker-/Glucosesirup verwendet. Statt des Zuckers/Glucosesirups sind zuckerfreie Rohstoffe einsetzbar. Es kann ein zuckerfreier Rohstoff oder eine Mischung aus mehreren zuckerfreien Rohstoffen verwendet werden z.B. Isomalt oder Maltit.

Die Süßwarenartikel können aus allen möglichen gießfähigen Zuckermassen, wie niedrigviskos (dünnflüssig) bis hochviskos (dickflüssig) sowie auch pastöse bzw. teigige Konsistenz aufweisen. Es sind sogar diejenigen Zuckermassen verwendbar, bei denen eine Fließgrenze überschritten ist. Die Zuckermasse kann hygroskopische Eigenschaften aufweisen. Vorzugsweise handelt es sich bei dem Süßwarenartikel um ein Gummi- und/oder Geleeprodukt. Darüber hinaus kann es sich bei der Zuckermasse auch um Marzipan handeln. Marzipan hat eine pastöse oder teigige Konsistenz. Die Zuckermasse kann auch einen hohen Anteil einer Trockensubstanz aufweisen. Im Falle einer pastösen bzw. teigigen Zuckermasse oder ab einer gewissen Dickflüssigkeit stellt sich nach dem Gießen der Zuckermasse eine haufenförmige Oberfläche ein. Die haufenförmige Oberfläche in einer Teilkavität kommt beim Schließvorgang der beiden Gießformteile mit der Zuckermasse in der anderen Teilkavität in Kontakt und wird dadurch verdrängt und innerhalb des entstehenden Formhohlraums verteilt.

Bei der Rezeptur für die Zuckermasse kann berücksichtigt werden, eine gute Ausformbarkeit des fertigen Süßwarenartikels aus der geöffneten Gießform zu gewährleisten. Entscheidend sind eine niedrige Viskosität der heißen Gießmasse und eine rasche Erstarrung der Gießmasse beim Abkühlen. Verantwortlich dafür sind ein geringer Wassergehalt, eine Gelatine mit hohem Molekulargewicht und Zucker mit hoher Trockensubstanz.

Der Süßwarenartikel kann über oben genannte Bestandteile hinaus auch einen oder mehrere der folgenden Bestandteile enthalten: Pharmazeutische Wirkstoffe, Vitamine, Aromen, Farben, Konzentrate.

Zum Gießen der Zuckermasse kann das sogenannte One-Shot-Verfahren angewandt werden, bei dem ein "Gießschuss" ausgeführt wird. Für das One-Shot-Verfahren kann eine Einzeldüse verwendet werden, die nur über einen Kanal für eine einzige Zuckermasse verfügt. Das One-Shot-Verfahren kann aber auch mit einer Düse ausgeführt werden, die mehrere Kanäle aufweist, durch die unterschiedliche Zuckermassen in einem "Gießschuss" gegossen werden können. Die Kanäle können nebeneinander angeordnet sein oder beispielsweise als Zentralkanal mit einem oder mehreren Ringkanälen, die konzentrisch um den Zentralkanal angeordnet sind. Bei der zuletzt genannten Anordnung wird in Abhängigkeit der Anzahl der Kanäle von einer sogenannten Triple-Shot-Düse gesprochen, wenn drei Kanäle vorgesehen sind oder allgemein von einer Multi-Shot-Düse mit einer unbestimmten Anzahl an Kanälen.

Zum Gießen der Zuckerwarenmasse in die Teilkavitäten kann pro Teilkavität eine einfache Düse (Einzeldüse) verwendet werden, die eine einzige Zuckermasse gießen kann. Alternativ kann eine Düse mit mehreren Kanälen oder Gruppen von Teilkanälen verwendet werden, um entsprechend der Anzahl der Kanäle oder Gruppen eine übereinstimmende Anzahl unterschiedlicher Zuckermassen gesteuert durch die gleiche Düse zu gießen (Bsp.: Triple-Shot-Düse).

Mit mehreren Einzeldüsen kann z.B. ein Süßwarenartikel hergestellt werden, für den unterschiedliche Zuckermassen in eine Teilkavität gegossen werden. Die Zuckermassen können so gegossen werden, dass sie in der Teilkavität nebeneinander oder übereinander angeordnet werden.

Auf diese Weise lässt sich beispielsweise ein Süßwarenartikel herstellen, der eine Hülle aus einer ersten Zuckermasse aufweist und darin angeordnet einen Kern aus einer zweiten Zuckermasse. Die erste Zuckermasse kann so ausgeführt sein, dass sie spätestens im fertigen Zustand des Süßwarenartikels transparent ist, so dass der umhüllte Kern, beispielsweise aus kontrastreicher zweiter Zuckermasse in der Hülle deutlich sichtbar ist.

Es hat sich überraschend auch als machbar erwiesen, eine halbflüssige zweite Zuckermasse als Kern bzw. Füllung zu gießen und diese Füllung innerhalb der Hülle dicht einzuschließen.

Die Schließbewegung zum Zusammenlegen der beiden Gießformteile wird zweckmäßig zeitgesteuert. Einfacherweise wird bei einem festen Weg eine Zeit vorgegeben, woraus sich die Geschwindigkeit ergibt. Darüber hinaus kann eine beschleunigte und eine verzögerte Bewegungsphase bis zur Erreichung der Zwischenposition ausgeführt werden, nämlich die Schließbewegung am Beginn des Zwischenschritts aus der Gießposition heraus beschleunigt und vor dem in Kontaktkommen der Oberseiten der Gießformteile verzögert ausgeführt wird. Neben einer Beschleunigung und einer Verzögerung kann eine Phase mit konstanter Geschwindigkeit vorgegeben sein. Des Weiteren kann ein Feder- und/oder Dämpfersystem eingesetzt werden, um das in Kontaktkommen der Oberseiten der Gießformteile zu dämpfen bzw. zu federn.

Einfacherweise können während der Schließbewegung die Gießformteile symmetrisch um eine Drehachse aufeinander zu gedreht werden bis in die Zwischenposition.

Hilfreich ist dabei außerdem, wenn die Schließbewegung der Gießformteile bis in die Zwischenposition so schnell durchgeführt wird, dass eingegossene Zuckermassen in den beiden Teilkavitäten sich noch miteinander verbinden können, wenn die Teilkavitäten in Überdeckung gebracht worden sind und die Gießform geschlossen ist. Der Vorgang, die beiden Gießformteile während des Zwischenschritts bis in die Zwischenposition zu bewegen, wird begünstigt durch eine Teilverfestigung der Zuckermasse innerhalb der beiden Teilkavitäten. Die Teilverfestigung ermöglicht, die beiden Gießformteile zu schließen, ohne dass hierbei Zuckermasse aus den Teilkavitäten herausläuft. Die Zuckermasse befindet sich aber in einem noch weichen beziehungsweise klebrigen Zustand, der eine Verbindung der beiden Zuckermassen ermöglicht, die sich in den beiden Teilkavitäten befinden, um zu einem einzigen Körper zu werden, der den fertigen Süßwarenartikel ergibt. Entscheidend für die Teilverfestigung ist dabei die Zeit, die zwischen dem Gießvorgang und dem Erreichen der Zwischenposition vergangen ist. Dabei ist anzumerken, dass die Schließbewegung aufgrund ihrer Schnelligkeit nur einen geringen Einfluss auf die Teilverfestigung hat.

In einer vorteilhaften Weise kann die Schließbewegung bis zur Erreichung der Zwischenposition, in der die Teilkavitäten der Gießformteile in Überdeckung gebracht sind, innerhalb einer Verschlusszeit ausgeführt werden, die im Bereich von 0,1 bis 3 Sekunden liegt.

Um die beiden Gießformen beschleunigt um die Drehachse zu drehen und rechtzeitig wieder abzubremsen, sodass die Oberflächen in der Zwischenposition und positionsgenau aufeinandergesetzt werden können, sind verschiedene Bewegungsprofile einsetzbar, die sich einfacherweise in einem zweidimensionalen kartesischen Koordinatensystem mit dem Winkelweg, der Winkelgeschwindigkeit und der Winkelbeschleunigung in Abhängigkeit von der Zeit darstellen lassen. Im einfachsten Fall ein Dreieck-Profil, bei dem ein Winkelweg beginnend in einer 0°-Startposition bis in eine 90°Zwischenposition ausgeführt wird. Das Dreieck-Profil gibt die Winkelgeschwindigkeit in Abhängigkeit der Zeit wieder. Die erste Hälfte des Winkelweges erfolgt als Beschleunigungsphase bis zu einem Knick im Bewegungsprofil und danach erfolgt die zweite Hälfte des Winkelweges als Verzögerungsphase. Sowohl der Winkelweg der einzelnen Gießformteile bis in die Zwischenposition, als auch der nicht dargestellte Winkelweg der vereinigten Gießform aus der Zwischenposition in ihre Transportlage werden jeweils mit konstanter Winkelbeschleunigung bzw. -verzögerung zurückgelegt.

Zweckmäßig wird die schrittweise Bewegung der Gießform von der Zwischenposition in die Transportlage innerhalb einer Ablagezeit ausgeführt werden, die im Bereich von 0,1 bis 3 Sekunden liegt.

Außer dem erwähnten Dreieck-Profil ist ein Trapez-Profil möglich, bei dem die Gießformteile zunächst mit einer Phase konstanter Winkelbeschleunigung beginnend aus der 0°-Position, dann in eine Phase mit konstanter Winkelgeschwindigkeit und schließlich in eine Phase der verzögerten Winkelbewegung bis in die 90°-Zwischenposition bewegt werden.

Darüber hinaus können knickfreie Bewegungsprofile als Polynomfunktion zugrunde gelegt werden, welche eine ruckfreie Bewegung ermöglichen. Die Bewegung beginnt ebenfalls jeweils in einer 0°-Startposition, aus der beide Gießformteile symmetrisch aufeinander zu bis in die 90°-Zwischenposition bewegt werden, bevor sie dann im zusammengeklappten Zustand als vereinigte Gießform in die 0°-Position zurückkehren, welche der Transportlage der Gießform entspricht.

Ein besonderer Nutzen des Verfahrens wird darin gesehen, dass wenigstens in eine Teilkavität eines Gießformteils zwei unterschiedliche Zuckermassen gegossen werden, und dass die unterschiedlichen Zuckermassen nebeneinander oder übereinander in die Teilkavität gegossen werden. Auf diese Weise lassen sich komplexe dreidimensionale Süßwarenartikel herstellen.

Um eine für das vorgeschlagene Verfahren zweckmäßige Konsistenz der Zuckermasse zu erhalten, wird die Zuckermasse in Abhängigkeit ihrer Zusammensetzung mit einer Gießtemperatur in einem bestimmten Temperaturbereich in die Teilkavitäten der Gießformteile hineingegossen, nämlich:
- Pektin-Gelee 70 - 100°C,
- Gelatine 50 - 90°C, bevorzugt 65 - 75°C,
- Carrageen 90 - 110°C, bevorzugt 100 - 110°C sowie
- Agar 35 - 70°C, bevorzugt 45 - 55°C,
- Hartkaramelle 80 - 150°C, bevorzugt 120-140°C,
- Toffee oder Weichkaramelle 80 - 120°C, bevorzugt 90 - 110°C.

Um das Verfahren zur Herstellung eines dreidimensionalen Süßwarenartikels aus wenigstens einer Zuckermasse zweckmäßig durchführen zu können, wird eine Vorrichtung hierfür vorgeschlagen, umfassend wenigstens eine Gießform, die wenigstens zwei zusammensetzbare Gießformteile aufweist, wobei jedes der Gießformteile mit wenigstens einer Teilkavität versehen ist, wobei die Teilkavitäten, wenn sie in Überdeckung gebracht sind, einen Formhohlraum bilden, sowie umfassend eine Handhabungseinheit mit einer Halteeinrichtung für wenigstens eines der Gießformteile und mit einer Schwenkeinrichtung mit der das Gießformteil bewegbar ist, wobei eine Steuerungseinheit vorgesehen ist, mit der die Bewegungsdynamik für die Schließbewegung der Gießformteile aus der Gießposition in die Zwischenposition sowie die Bewegungsdynamik für die Schwenkbewegung der Gießformteile aus der Zwischenposition in die Transportlage steuerbar ist.

Zweckmäßig weist wenigstens ein Gießformteil an seiner Oberseite einen ringförmigen Rand auf, der die Teilkavität umfängt und an der Oberseite hervorsteht. Der ringförmige Rand ist eine Erhöhung der Oberseite. Seine Innenseite bildet den oberen Bereich der Teilkavität. Im zusammengelegten Zustand der Oberseiten trifft der ringförmige Rand des einen Gießformteils gegen die Oberseite des anderen Gießformteils. Die Oberseite des anderen Gießformteils kann eben sein oder ihrerseits einen ringförmigen Rand aufweisen. In jedem Fall wird eine gewisse Kraft ausgeübt, welche die Oberseiten gegeneinanderdrückt. Dabei entsteht an dem hervorstehenden ringförmigen Rand eine hohe Flächenpressung. Die hohe Flächenpressung bewirkt eine Abdichtung des Formhohlraums, der durch die gegeneinander gelegten Teilkavitäten entstanden ist. Falls sich in den beiden Teilkavitäten zusammen mehr Zuckermasse befunden hat, als in den Formhohlraum hineinpasst, dann wird der überschüssige Anteil während des Zusammenlegens der Teilkavitäten herausgequetscht. Durch die hohe Flächenpressung am ringförmigen Rand wird der herausgequetschte überschüssige Anteil der Zuckermasse abgetrennt von der Zuckermasse innerhalb des Formhohlraums, so dass der Formhohlraum vollständig geschlossen und vollständig gefüllt einen Süßwarenartikel guter Qualität erzeugen kann.

Um die obige Funktionalität zu begünstigen ist zweckmäßig der ringförmige Rand als Trennkeil ausgebildet. Er weist einen stabilen keilförmigen Querschnitt auf, wobei es bei der Querschnittsform um einen Keilstumpf handeln kann, der eine freie Randfläche aufweist, die eben an einer gegenüberliegenden Oberseite anliegen kann.

In einer vorteilhaften Ausgestaltung ist die Gießform mit Positioniermitteln versehen, um die beiden Gießformteile relativ zueinander auszurichten, wenn deren Oberseiten miteinander in Kontakt kommen.

Als Positioniermittel können einfacherweise Magnete und/oder Zentrierstifte und komplementäre Zentrieröffnungen vorgesehen sein. Zentrierstifte und -öffnungen können beispielsweise an zwei Ecken einer Gießform vorgesehen sein, um ein Verrutschen zweier Gießformteile relativ zueinander zu vermeiden, sobald die Zentrierstifte in die Zentrieröffnungen eingedrückt sind. Durch diese Ausrichtung ist eine Fixierung der Gießformteile geschaffen, die auch in nachfolgenden Verfahrensschritten die Gießformteile sicher aufeinander hält.

Magnete dienen primär dem Zusammenhalten der Gießformteile bewirken eine gewisse Spannkraft, welche die Gießformteile, respektive deren Oberseiten gegeneinander zwingt. Für die Positionierung tragen die Magnete auch bei. Um die Gießform sicher zu schließen, kann eine größere Spannkraft erforderlich sein, als die Magnete leisten. Dafür ist eine Spannkraft mittels eines externen Spannmittels erzeugbar. Das Spannmittel ist in der Lage eine Spannkraft zu erzeugen, die das sichere Schließen der Gießformteile gewährleisten kann. Darüber hinaus kann es sein, dass Zuckermasse über die Teilkavität hinaus hervorsteht und einen Zipfel bildet, wie bei einem Baiser (Schaumgebäck). Zum Schließen der Gießform muss die hervorstehende Zuckermasse verformt werden. Es ist eine gewisse Spannkraft erforderlich, um die Gießformteile dicht zusammendrücken zu können und die Zuckermasse in dem Formhohlraum zu verteilen. Eine geeignete Vorrichtung für die Durchführung des vorgeschlagenen Verfahrens zur Herstellung dreidimensionaler Süßwarenartikel sieht ein Schließmittel vor, das dazu ausgelegt ist, die benötigte Spannkraft in die Gießformteile zu übertragen, damit diese in ausreichendem Maße gegeneinander gespannt werden können, um den Formhohlraum dicht zu schließen.

Günstig ist wenigstens eines der Gießformteile als Dauerform aus einem unelastischen Kunststoff ausgeführt, wie Polycarbonat oder einem seiner Copolymere.

Vorteilhaft wegen der geringeren Formkosten sind Formen aus diesem unelastischen Kunststoff. Der Begriff "unelastischer Kunststoff" wird hier zur Abgrenzung von gummielastischen Kunststoffen verwendet. Solche Kunststoffe sind nicht völlig spröde oder plastisch, sondern in gewissen Grenzen noch elastisch verformbar. Es kann sich dabei sowohl um Duroplaste als auch Thermoplaste handeln. Wegen der leichteren Bearbeitung sind Thermoplaste bevorzugt; jedoch ist darauf zu achten, dass sie ihre Festigkeit bis über die Gießtemperatur der Zuckermasse behalten. Geeignete Kunststoffe sind beispielsweise Polycarbonat und dessen Copolymere.

Formen aus unelastischem Kunststoff sind erheblich kostengünstiger als solche aus Aluminium, Gummi, Elastomeren oder Silikon. Sie benötigen auch keine Stützkonstruktionen und aufwendige Entformungsvorrichtungen.

Um die Ausformbarkeit eines fertigen Süßwarenartikels zu unterstützen, kann ein Trennmittel verwendet werden, das vor dem Eingießen der Zuckermasse angewandt wird, um die formgebende Oberfläche der Teilkavität damit zu benetzen. Als Trennmittel können Fette und Öle pflanzlichen Ursprungs oder Wachse verwendet werden. Geeignet sind beispielsweise Palm-, Palmkern-, Kokos-, Soja- und Sonnenblumenöl. Beispiele für geeignete Wachse sind Carnubawachs und auch Bienenwachs. Es können auch Mischungen verschiedener dieser Stoffe angewendet werden. Ein Trennmittel kann darüber hinaus Zusätze wie Lösungs-, Verdünnungs- und Benetzungshilfsmittel enthalten. Alle geeigneten Trennmittel und Zusätze müssen für die Verwendung bei Lebensmitteln zugelassen sein. Eine hauchdünne Schicht des Trennmittels ist ausreichend, beispielsweise eine Schichtdicke von 20-44 um. Das Benetzen kann mit bekannten Verfahren erfolgen, beispielsweise Aufstreichen, Spülen, Aufsprühen. Um eine dünne Beschichtung zu erreichen, kann das Trennmittel zweckmäßig durch Erwärmen oder durch Zusatz von Verdünnungsmitteln auf eine niedrige Viskosität eingestellt werden, beispielsweise 50-150 mPas.

Nachstehend ist die Erfindung anhand mehrerer Figuren in einer Zeichnung beispielhaft dargestellt und detailliert beschrieben. Es zeigen:
- Fig. 1: eine perspektivische Darstellung zweier Gießformteile in der offenen Gießposition,
- Fig. 2a: eine schematische Darstellung der Gießposition gemäß Fig. 1,
- Fig. 2b: eine schematische Darstellung einer Zwischenposition mit zusammengelegten Gießformteile, die eine geschlossene Gießform bilden sowie die Gießform in einer Transportlage,
- Fig. 3a: eine perspektivische Darstellung der Zwischenposition gemäß Fig. 2b,
- Fig. 3b: eine perspektivische Darstellung der Transportlage gemäß Fig. 2b,
- Fig. 4: eine Schnittdarstellung durch zwei Gießformteile während einer Schließbewegung,
- Fig. 5: zeigt einen vergrößerten Ausschnitt der Gießform gemäß Fig. 4 in der Zwischenposition mit geschlossenem Formhohlraum,
- Fig. 6: Gießformteile in der Gießposition mit eingefüllter Zuckermasse,
- Fig. 7: Gießformteile in der Gießposition mit eingefüllter Zuckermasse sowie einem weiteren Bestandteil,
- Fig. 8: ein erstes Bewegungsprofil für die Gießformteile,
- Fig. 9: ein zweites Bewegungsprofil für die Gießformteile,
- Fig. 10: ein drittes Bewegungsprofil für die Gießformteile
- Fig. 11: eine Draufsicht auf eine Vorrichtung zur Durchführung des Verfahrens,
- Fig. 12: eine Seitenansicht auf die Vorrichtung gemäß Fig. 11 in der Gießposition,
- Fig. 13: eine Seitenansicht der Vorrichtung gemäß Fig. 12 in der Zwischenposition.

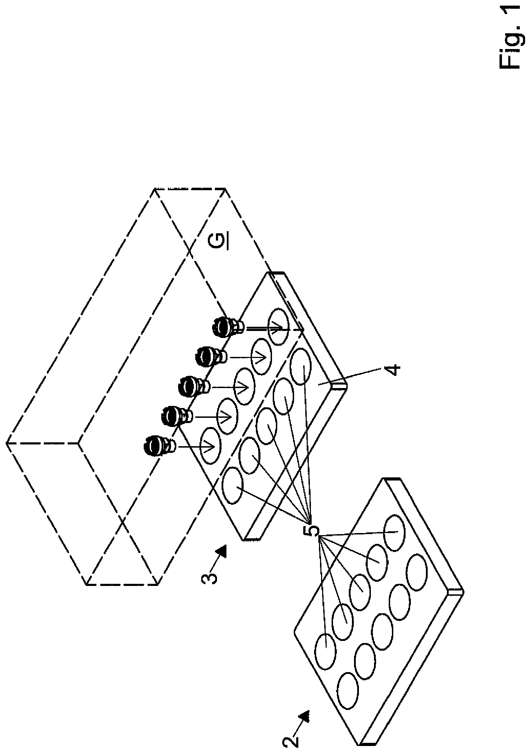

In Fig. 1 ist eine Gießform 1 gezeigt und zwar sind deren beide Gießformteile 2 bzw. 3 perspektivisch in einer Ebene nebeneinander dargestellt. Die Gießform 1 ist zur Herstellung eines dreidimensionalen Süßwarenartikels aus wenigstens einer Zuckermasse nach dem hier vorgeschlagenen Verfahren vorgesehen. Sie ist in Fig. 1 geöffnet. Die Gießformteile 2 und 3 befinden sich so in einer Gießposition PG, weil in dieser ebenen Anordnung jedes Gießformteil zu einer Gießmaschine G bewegbar ist, mit der Zuckermasse eingegossen werden kann. Zur Aufnahme der Zuckermasse ist am Beispiel des Gießformteils 3 gezeigt, dass eine Oberseite 4 mit je zehn Teilkavitäten 5 versehen ist. Die Teilkavitäten 5 sind an der Oberseite 4 in zwei Reihen à fünf Teilkavitäten angeordnet. In diesem Beispiel wird die Zuckermasse von der Gießmaschine G pro Reihe nacheinander in die Teilkavitäten gegossen.

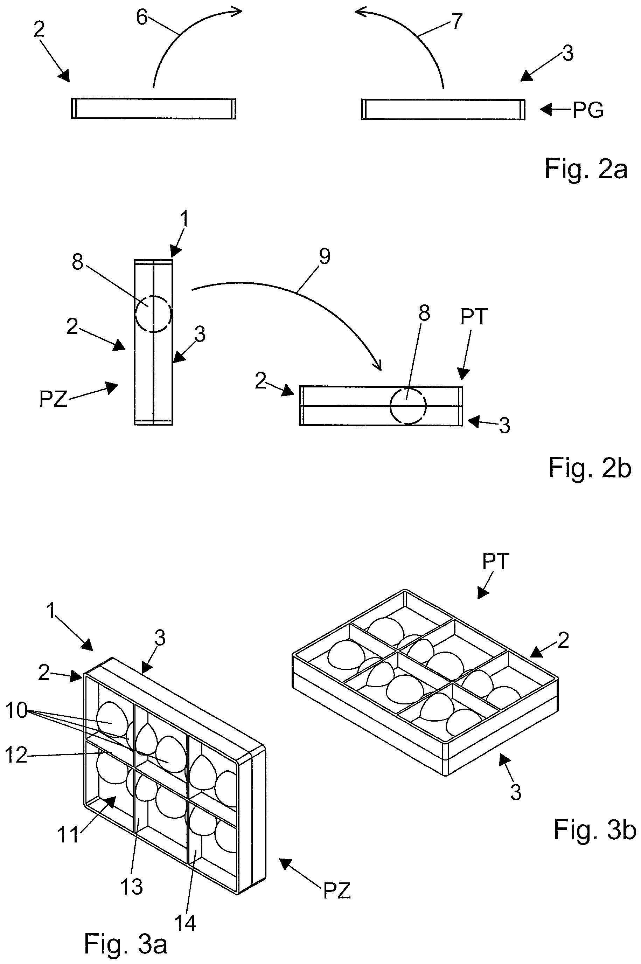

Die Figuren 2a und 2b zeigen schematisch dargestellt die zwei Bewegungsschritte der Gießform 1 bzw. der Gießformteile 2 und 3, die aufeinander folgen. Nach Fig. 2a ist die Gießform 1 geöffnet. Ihre Gießformteile befinden sich in der Gießposition PG in einer Ebene. Mit Pfeilen 6 und 7 ist die Richtung einer symmetrischen Schließbewegung angedeutet, mit der die Gießformteile 2 und 3 zusammenlegbar sind und eine Zwischenposition PZ einnehmen, wie in Fig. 2b gezeigt. Danach sind die Oberseiten jeweils um einen Winkelbetrag von 90° gedreht worden. In der so erreichten Zwischenposition PZ berühren sich die Oberseiten der Gießformteile 2 und 3. Die hier ausführlich beschriebene Variante mit einer symmetrisch drehenden Schließbewegung der beiden Gießformteile bis in die 90°-Zwischenposition ist bevorzugt. Es sind jedoch auch andere Bewegungsformen möglich, bei denen die Zwischenposition in einem Winkel liegt der kleiner oder größer als 90° ist. So kann beispielsweise ein Gießformteil um 89° und das andere Gießformteil um 91° entgegengesetzt gedreht werden oder ein Gießformteil um 10° und das andere Gießformteil um 170° entgegengesetzt gedreht werden, um die geschlossene Gießform zu erhalten. Die Teilkavitäten 5 der beiden Gießformteile 2 und 3 sind in Überdeckung gebracht worden und bilden einen allseits geschlossenen Formhohlraum 8, welcher der enthaltenen Zuckermasse die gewünschte dreidimensionale Form verleiht.

Auch gezeigt in Fig. 2b ist der folgende Bewegungsschritt anhand eines Pfeils 9. Es handelt sich um eine Schwenkbewegung, welche die Gießformteile 2 und 3 gemeinsam als bereits geschlossene Gießform 1 von der Zwischenposition PZ durch eine Drehung um 90° bis in eine Transportlage PT bewegt. In der Transportlage PT ist das Gießformteil 3 wieder in der Position angelangt, in der es sich anfänglich in der Gießposition befunden hat, die in Fig. 2a gezeigt ist. Das Gießformteil 2 hat seine anfängliche Position verlassen und befindet sich nun kopfüber auf dem Gießformteil 3 mit seinen Teilkavitäten nach unten gerichtet. Zusammen mit den Teilkavitäten 5 des Gießformteils 3 werden Formhohlräume 8 gebildet.

In Fig. 3a ist eine perspektivische Ansicht der Gießform 1 in der Zwischenposition PZ gezeigt sowie in Fig. 3b eine perspektivische Ansicht der Gießform 1 in der Transportlage PT dargestellt. Die Gießform 1 weist kalottenförmige Teilkavitäten auf, deren Außenwand 10 jeweils an einer Unterseite 11 des Gießformteils 2 erkennbar ist. Außerdem sind an der Unterseite 11 Stege 12, 13 und 14 angeordnet, welche die Formstabilität des Gießformteils 2 begünstigen. Im Übrigen ist die Unterseite 11 quasi hohl, wodurch Material und Gewicht eingespart wird.

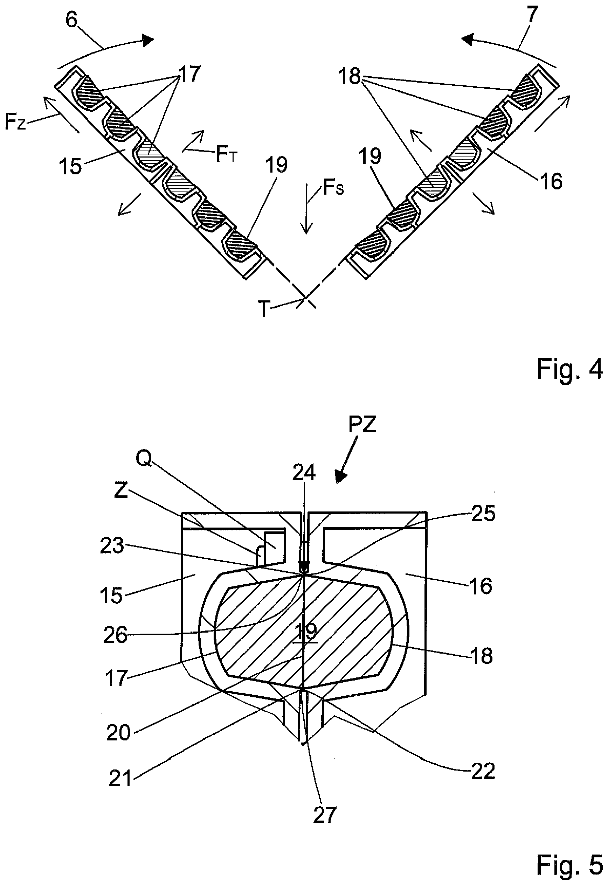

Fig. 4 ist eine Schnittdarstellung durch zwei Gießformteile 15 und 16 einer anderen Gießform während einer Schließbewegung um eine Drehachse T dargestellt. Das Gießformteil 15 weist in dem gezeigten Querschnitt sechs Teilkavitäten 17 auf und das Gießformteil 16 ist in dem gezeigten Querschnitt mit sechs Teilkavitäten 18 versehen. Die Teilkavitäten 17 und 18 sind mit Zuckermasse 19 gefüllt. Auf die Zuckermasse 19 wirken während der Schließbewegung gemäß der Pfeile 6 und 7 Kräfte ein, die aus der Dynamik der Schließbewegung und der Schwerkraft Fₛ resultieren. Außerdem wirken Adhäsionskräfte an der Grenzfläche zwischen der Zuckermasse und der Teilkavität sowie Kohäsionskräfte innerhalb der Zuckermasse 19. Je höher die Kohäsionskräfte in der Zuckermasse 19 sind, desto höher ist die innere Reibung und somit die Viskosität. Die Viskosität wiederum ist ein Maß für den Widerstand der Zuckermasse 19 gegen Scherung, d.h. gegen Fließvorgänge. Je höher die Viskosität der Zuckermasse 19 ist, desto größer muss eine Kraft sein, um sie in einem gewissen Zeitinterwall in einer gewissen Weise fließen zu lassen. Gleichzeitig wirkt die Schwerkraft Fₛ, wenn während der Schließbewegung ein Fließvorgang der Zuckermasse 19 nach unten aus der Teilkavität 17 bzw. 18 heraus stattfindet. Dem entgegen wirkt durch die Dynamik der Schließbewegung eine erzeugte Zentrifugalkraft F_{z}, welche ein Fließen der Zuckermasse 19 in radialer Richtung weg von der Drehachse T bewirkt. Gleichzeitig wirken die Kohäsionskräfte innerhalb der Zuckermasse 19 den Fließvorgängen in der Zuckermasse 19 entgegen.

Die Zeitdauer des Schließvorgangs muss so angepasst werden, dass sich die Einflüsse der Zentrifugalbeschleunigung (je schneller der Schließvorgang, desto höher die Zentrifugalkraft) und die Einflüsse der Erdanziehungskraft in der Mitte der Form möglichst weitestgehend neutralisieren. Durch ein nahezu vorhandenes Kräftegleichgewicht in der Mitte der Form fließt die Süßwarenmasse möglichst wenig. Wenn die Viskosität der Süßwarenmasse ausreichend hoch ist, kann sogar ein Fließen über die Ränder der Kavität hinaus, vermieden werden. Es ist eine Verzögerungsphase vorgesehen, die eine Trägheitskraft F_{T} auf die Zuckermasse bewirkt, welche diese senkrecht zur Oberfläche eines Gießformteils aus der Teilkavität heraustreibt. Demgegenüber sorgt die Kohäsionskraft für das Aneinanderhaften der Zuckermasse und wirkt ihrem Zerfließen/Zerlaufen entgegen und die Adhäsionskraft bewirkt, dass die Zuckermassen nicht aus den Teilkavitäten herausfließen.

Durch eine Auswahl einer geeigneten Rezeptur bzw. einer geeigneten Zusammensetzung der Zuckermasse 19 kann deren Fließvorgang verlangsamt bzw. so eingestellt werden, dass ihre Viskosität in zweckmäßiger Weise abgestimmt ist auf die Dynamik der Schließbewegung der Gießformteile 15 und 16. Der Fließvorgang kann auch durch eine Teilverfestigung beeinflusst werden und zwar in dem Zeitintervall zwischen dem Gießvorgang und der Schließbewegung der beiden Gießformteile einer Gießform. Zweckmäßig ist es, wenn die inneren Fließvorgänge während der Schließbewegung so langsam ablaufen, dass während der Zeitdauer des Schließvorgangs keine Zuckermasse 19 oder nur ein geringes Maß Zuckermasse über die Ränder der Teilkavitäten 17 bzw. 18 hinaus fließen kann, wobei hinzukommt, dass sich die Zuckermassen dann, wenn deren Oberflächen beim Schließen des Formhohlraums aufeinandertreffen, noch in einem Zustand sind, in welchem sie sich stofflich miteinander verbinden können. Es soll also dann noch eine gewisse "Klebrigkeit" der zusammentreffenden Oberflächen der Zuckermassen vorhanden sein.

Im dargestellten Beispiel der Fig. 4 ist in jede Teilkavität 17 bzw. 18 etwas weniger Zuckermasse 19 eingegossen worden, als die Teilkavität maximal fassen kann. In den Teilkavitäten stellen sich die Oberflächen der Zuckermasse 19 entsprechend der auf sie wirkenden Kräfte ein. Im gezeigten Beispiel ist der Füllstand so gewählt. An jener Teilkavität, die der Drehachse T am weitesten entfernt ist, ist die Zentrifugalkraft F_{z} nicht zu groß, als das Zuckermasse 19 radial nach außen überlaufen würde und an jener Teilkavität, die der Drehachse T nächstliegend ist, ist die Schwerkraft Fₛ nicht zu groß, als das Zuckermasse 19 nach unten hinauslaufen würde. Um dies zu erreichen ist anfänglich in der Gießposition PG weniger Zuckermasse in die Teilkavität (17, 18) eingegossen worden, als maximal hineingepasst hätte. Der Füllstand der Zuckermasse 19 ist unterhalb des Randes der Teilkavität (17, 18).

Zuckermasse würde dann überlaufen, wenn die Schwerkraft ausreichend lange auf die Zuckermasse einwirken kann. Durch eine zielgerichtete Abstimmung zwischen der Zeit, Viskosität der Zuckermasse und Dynamik der Schließbewegung kann ein Überlaufen von Zuckermasse aus einer Teilkavität vermieden werden. Auf diese Weise kann ein größeres Volumen Zuckermasse 19 eingegossenen werden. Das Volumen der eingegossenen Zuckermasse lässt sich so in Übereinstimmung bringen mit dem tatsächlichen Volumen der Teilkavität (17, 18).

Fig. 5 zeigt einen vergrößerten Ausschnitt der Gießform aus Fig. 4 in der Zwischenposition. Die Gießformteile 15 und 16 sind zusammengelegt und deren beide Teilkavitäten 17 und 18 bilden einen geschlossenen Formhohlraum 20, der vollständig mit Zuckermasse 19 gefüllt ist. An der Teilkavität 17 ist ein ringförmiger Rand 21 vorgesehen und an der Teilkavität 18 ein ringförmiger Rand 22. Die beiden ringförmigen Ränder stehen jeweils an der Oberseite hervor. Der ringförmige Rand 21 weist einen keilstumpfförmigen Querschnitt 23 auf, der einen Trennkeil 24 bildet. Der Trennkeil 24 weist eine ringförmige Trennfläche 25 auf, die parallel zur Oberseite des Gießformteils 15 angeordnet ist. Die Trennfläche 25 weist einen geringen Flächeninhalt auf, wodurch sie eine hohe Flächenpressung erzielt, wenn sie beim Zusammenlegen der beiden Gießformteile mit dem Gießformteil 16 in Kontakt kommt und zusammengedrückt werden. Eine Innenseite 26 des Trennkeils gehört zur formgebenden Teilkavität 17 und bildet mit dieser eine zusammenhängende Innenfläche. Der ringförmige Rand 22 weist eine identische Gestaltung auf wie der ringförmige Rand 21. Grundsätzlich ist es auch möglich, auf einen der ringförmigen Ränder zu verzichten. Wenn an der Gießform nur ein ringförmiger Rand 21 vorgesehen ist, dann wird dieser an jenem Gießformteil angeordnet, welches in der Transportlage unten liegt. Ein ringförmiger Rand hat einen Vorteil insbesondere dann, wenn ein überschüssiger Anteil Zuckermasse 19 aus dem Formhohlraum herausgequetscht wird. Zum einen wird durch die hohe Flächenpressung der überschüssige Anteil Zuckermasse abgetrennt von der Zuckermasse 19 innerhalb des Formhohlraums. Darüber hinaus hat der herausgequetschte überschüssige Anteil Zuckermasse Platz an einer Außenseite 27 des ringförmigen Randes 21. Ohne ringförmigen Rand würde sich die überschüssige Zuckermasse in einem weiten Bereich auf der Oberseite des Gießformteils verteilen, was nachteilig einen erhöhten Reinigungsaufwand erzeugt. Wenn zwei ringförmige Ränder 21 und 22 vorgesehen sind, dann hat dies den Vorteil, dass jedes Gießformteil in der Transportlage wahlweise oben oder unten verwendet werden kann. Dies gilt jedenfalls wenn die Teilkavitäten oben und unten symmetrisch sind, weil der zu formende Süßwarenartikel eine symmetrische Gestalt aufweist. Andernfalls, für unsymmetrische dreidimensionale Süßwarenartikel sind zweierlei Gießformteile erforderlich, bei denen oben und unten nicht vertauschbar ist. Um die relative Ausrichtung der beiden Gießformteile zu fixieren, ist das Gießformteil 15 mit zwei Zentrierstiften versehen, wie in dem Ausschnitt gezeigten Zentrierstift Z und das Gießformteil 16 ist mit zwei komplementären Zentrieröffnungen Q versehen.

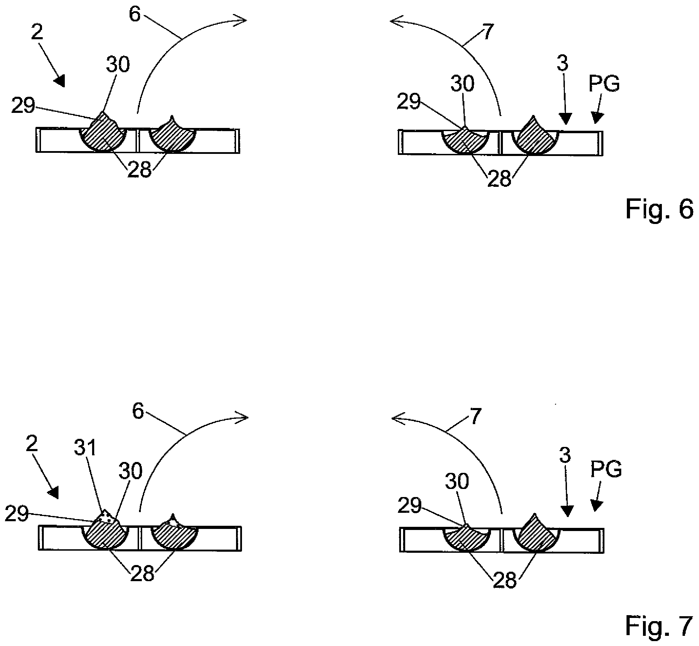

Fig. 6 zeigt die Gießformteile 2 und 3 gemäß Fig. 2a in der Gießposition PG mit eingegossener Zuckermasse 28. In diesem Fall ist die Zuckermasse 28 in einem noch weichen beziehungsweise klebrigen Zustand. Sie ist in einem Maße teilverfestigt oder weist eine derart hohe Viskosität auf, dass sie einen Haufen 29 bildet, der eine erhabene Oberfläche 30 aufweist, die teilweise über die Teilkavität hervorsteht und sich nur sehr langsam abflacht. Die innerhalb der Zuckermasse wirkende Kohäsion kann so beeinflusst werden, dass die erhabene Oberfläche 30 des Haufens 29 ausreichend lange anhält, um den Schließvorgang der Gießformteile 2 und 3 auszuführen, der sie aus der horizontalen Gießposition PG bis in die Zwischenposition bewegt, in der die Gießform geschlossen ist. Die beiden Teilkavitäten, welche zu einem Formhohlraum zusammengelegt werden, befinden sich erhabene Haufen 29 Zuckermasse 28. Während der Schließbewegung treffen die erhabenen Haufen 29 der beiden Gießformteile 2 und 3 aufeinander und werden zusammengedrückt, so dass sie sich verformen, wobei sich die Zuckermasse in den Teilkavitäten verteilt und sie ausfüllt. Die Haufen 29 weisen an den Oberflächen 30 dann noch eine Klebrigkeit auf, welche die Zuckermassen 28 sich miteinander verbinden und zu einem einzigen Körper werden lässt, der den fertigen Süßwarenartikel ergibt. In die Teilkavitäten wird idealerweise Zuckermasse 28 in einer Menge eingegossen, deren Volumen identisch ist mit dem Volumen der Teilkavität oder es wird in der Summe in beide Teilkavitäten ein Volumen eingegossen, das in der Summe dem Volumen des Formhohlraums entspricht.

Alternativ ist es möglich, die Zuckermasse 28 in einer Menge einzugießen, die in der Summe das Volumen des Formhohlraums etwas übersteigt. In diesem Fall ist der Formhohlraum vollständig ausgefüllt und beim Schließen der Gießform wird ein überschüssiger Anteil Zuckermasse aus dem entstehenden Formhohlraum herausgedrückt. Die überschüssige Zuckermasse kann mittels eines ringförmigen Randes (nicht dargestellt) abgetrennt werden von der Zuckermasse, nach dem Prinzip, wie anhand von Fig. 4 beschrieben.

Eine andere Alternative sieht vor, weniger Zuckermasse 28 einzugießen, die in der Summe das Volumen des Formhohlraums etwas unterschreitet. In diesem Fall kann der Formhohlraum nicht vollständig ausgefüllt werden, sondern es wird eine geringe Lücke im Formhohlraum akzeptiert, die leer bleibt bzw. Luft enthält. Zu berücksichtigen ist, dass die Genauigkeit der Gießmaschine in der Regel keine hochgenaue Dosierung erlaubt. Unter Berücksichtigung eines vorrichtungstechnisch vorgegebenen Dosierungsfehlers der Gießmaschine kann diese entweder so eingestellt werden, dass in Summe überdosiert wird, so dass ein überschüssiger Anteil Zuckermasse 28 herausgequetscht werden muss aus dem Formhohlraum oder die Gießmaschine wird so eingestellt, dass in Summe unterdosiert wird, damit eine Lücke im Formhohlraum entsteht. Die Größe der Lücke kann minimiert werden. Sie muss nicht größer sein als das Volumen, welches dem Dosierungsfehler der Gießmaschine entspricht.

Ein weiteres Beispiel ist in Fig. 7 dargestellt, das wiederum auf den Gießformteilen 2 und 3 gemäß Fig. 2a in der Gießposition PG basiert. Im Unterschied zum Beispiel der Fig. 6 ist hier neben der Zuckermasse 28 ein zweiter Bestandteil 31 eingefüllt worden und zwar jeweils in einer der Teilkavitäten eines Formhohlraums. Bei diesem Bestandteil kann es sich um eine weitere Zuckermasse handeln oder beispielsweise um einen einlegbaren festen Bestandteil, wie eine Nuss, etc. Falls der Bestandteil 31 eine Zuckermasse ist, dann kann diese in einem Maße teilverfestigt sein, dass sie sich zwar mit der ersten Zuckermasse 28 verklebt, jedoch gar nicht vermischt oder eine Vermischung nur in einer begrenzten Schicht stattfindet. Im Übrigen kann auch in diesem Beispiel überdosiert oder unterdosiert werden, um in der Summe der Zuckermasse 28 inklusive des weiteren Bestandteils 31 mehr oder weniger in die Teilkavitäten dosiert zu haben, als dem Volumen des entstehenden Formhohlraums entspricht.

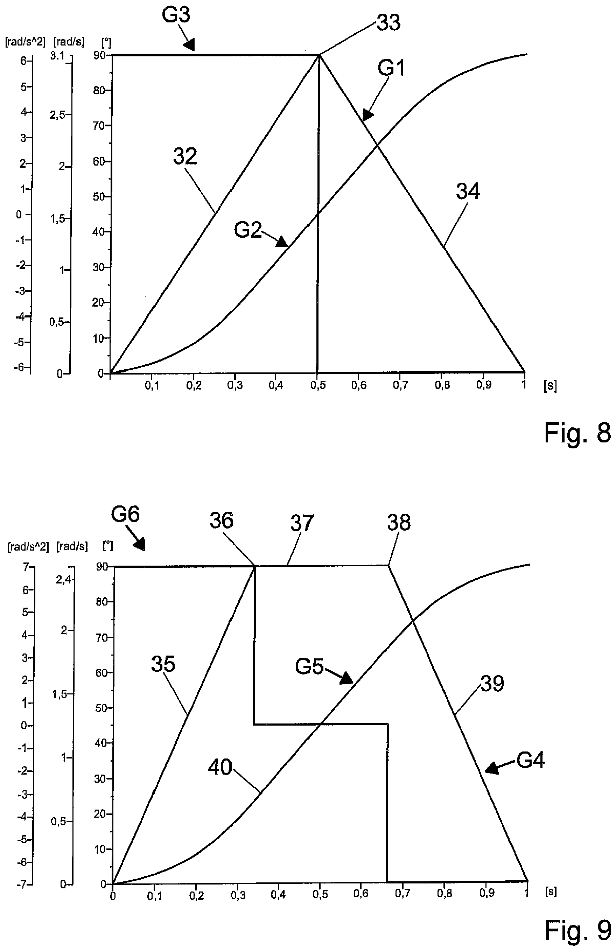

Um die Gießform bzw. die beiden Gießformteile um die Drehachse in die Zwischenposition zu bewegen, ist es zweckmäßig die Zeit der Schließbewegung zu steuern. Ebenso nützt es, wenn die Schwenkbewegung aus der Zwischenposition in die Transportlage ebenfalls zeitgesteuert ausgeführt wird. Die Figuren 8, 9 und 10 geben Beispiele für entsprechend zeitgesteuerte Bewegungsprofile, die einfacherweise in einem zweidimensionalen kartesischen Koordinatensystem dargestellt sind mit der Winkelgeschwindigkeit [rad/s] über der Zeit [t]. Außerdem ist jeweils ein Graph (Funktionsgraph) eingetragen, welcher den Winkel über der Zeit darstellt sowie ein Graph für die Winkelbeschleunigung über der Zeit [rad/s²].

In Fig. 8 ist ein Dreieck-Profil dargestellt. Es betrifft die Winkelgeschwindigkeit der drehenden Schließbewegung der Gießformteile, beginnend aus einer 0°-Gießposition PG bis in eine 90°-Zwischenposition PZ, die nach t = 1,0 Sekunden erreicht ist. Nicht abgebildet ist hier die anschließend erforderliche Schwenkbewegung der geschlossenen Gießform aus der 90°-Zwischenposition PZ bis in die 0°-Transportlage PT, welche ebenfalls zeitgesteuert sein kann.

In dem Dreieck-Profil der Fig. 8 nimmt die Winkelgeschwindigkeit bis t = 0,5 Sekunden zu. Es handelt sich um eine Beschleunigungsphase, die in einem Graph G1 als eine ansteigende Gerade 32 im Dreieck-Profil dargestellt ist. Anschließend erfolgt ein Knick 33 und die Winkelgeschwindigkeit nimmt bis t = 1 Sekunde wieder ab, was eine Verzögerungsphase bedeutet, die als abfallende Gerade 34 im Dreieck-Profil dargestellt ist. Darüber hinaus ist in Fig. 8 als weiterer Graph G2 der Winkel über der Zeit dargestellt. Demnach ist nach t = 1 Sekunde die 90°-Zwischenposition erreicht. Darüber hinaus ist als ein dritter Graph G3 die Winkelbeschleunigung über der Zeit dargestellt [rad/s²].

Das in Fig. 9 dargestellte Bewegungsprofil ist trapezförmig. Das Trapez-Profil weist in einem Graph G4 ebenfalls eine Beschleunigungsphase auf, die nach ca. t = 0,3 Sekunden endet und als ansteigende Gerade 35 dargestellt ist. Diese Gerade geht mit einem Knick 36 über in eine Horizontale 37, d.h. in eine Phase mit konstanter Winkelgeschwindigkeit. Der Horizontalen schließt sich wiederum mit einem Knick 38 eine Verzögerungsphase an, die als abfallende Gerade 39 dargestellt ist, welche bei ca. t = 0,7 Sekunden beginnt und nach t = 1 Sekunde bis auf 0 rad/s abgebremst ist. Außerdem ist als Graph G5 der Winkel über der Zeit eingetragen, der nach t = 1 Sekunde die 90°-Zwischenposition erreicht, wobei in der Mitte zwischen der Beschleunigungsphase und der Verzögerungsphase eine Gerade 40 dargestellt ist, welche die Phase mit konstanter Winkelgeschwindigkeit zeigt sowie als Graph G6 wiederum die Winkelbeschleunigung.

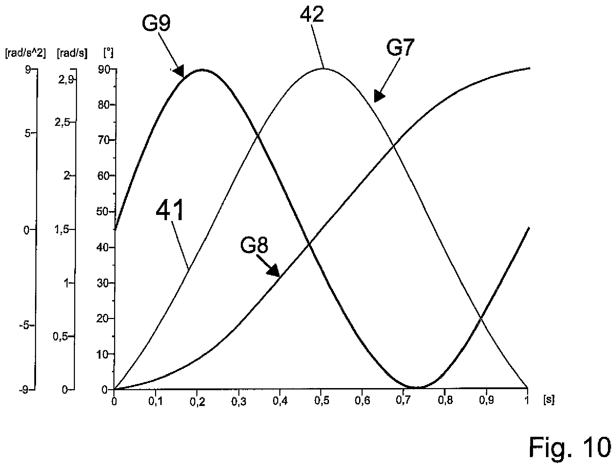

Darüber hinaus kann ein Winkelgeschwindigkeit-Zeit-Verlauf vorgesehen sein, dessen Graph G7 als Polynomfunktion 41 ausgestaltet ist, wie in Fig.10. Dieser knickfreie Graph weist ebenfalls zumindest eine Beschleunigungsphase und eine Verzögerungsphase auf, welche in einem Maximum 42 ineinander übergehen. In dem Beispiel von Fig. 10 handelt es sich um ein Polynom fünften Grades. Darüber hinaus ist als Graph G8 in Fig. 10 der Winkel über der Zeit eingetragen, der nach t = 1 Sekunde die 90°-Zwischenposition erreicht, in der die Gießformteile zusammengelegt sind und die Gießform geschlossen ist sowie als Graph G9 wiederum die Winkelbeschleunigung.

Die nicht abgebildete Schwenkbewegung der geschlossenen Gießform aus der 90°-Zwischenposition PZ bis in die 0°-Transportlage PT kann ebenfalls eine Beschleunigungsphase und eine Verzögerungsphase aufweisen.

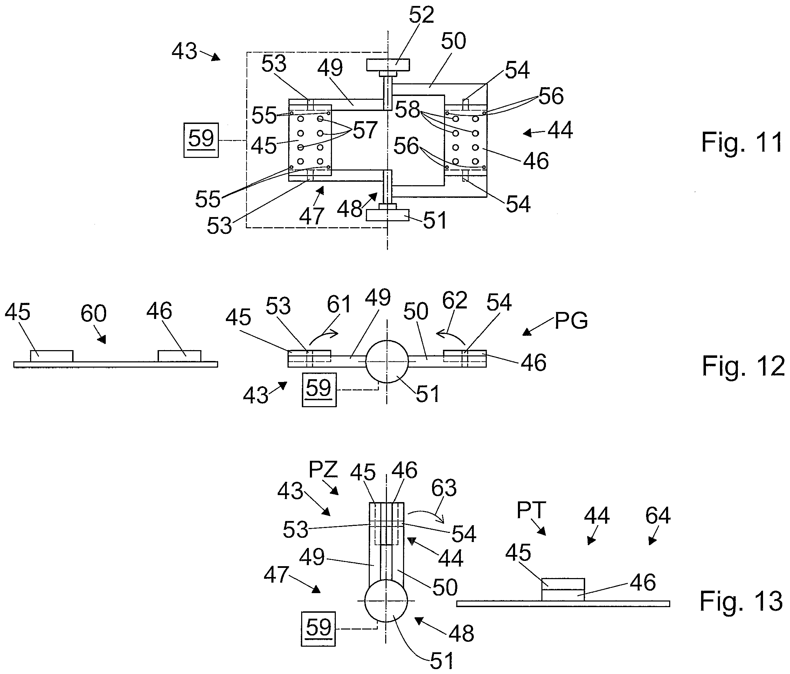

Die Figuren 11, 12 und 13 zeigen eine Vorrichtung 43 zur Durchführung des vorgeschlagenen Verfahrens zur Herstellung eines dreidimensionalen Süßwarenartikels. Fig. 11 ist eine Draufsicht auf die Vorrichtung 43. Sie umfasst eine Gießform 44, die zwei zusammensetzbare Gießformteile 45 und 46 aufweist. Des Weiteren umfasst die Vorrichtung eine Handhabungseinheit 47 mit einer Schwenkeinrichtung 48. Die Schwenkeinrichtung ist mit zwei Schwenkaufnahmen 49 und 50 sowie jede Schwenkaufnahme mit einem Schwenkantrieb 51 und 52 versehen. Jeder Schwenkaufnahme ist eine Halteeinrichtung 53 bzw. 54 zur lösbaren Fixierung eines der beiden Gießformteile 45 und 46 zugeordnet. Während einer Schließbewegung ist jedes Gießformteil 45 und 46 an seiner entsprechenden Schwenkaufnahme 49 bzw. 50 fixiert. Sobald die Zwischenposition PZ erreicht und die Gießform 44 geschlossen ist löst dann die Halteeinrichtung 53 der Schwenkaufnahme 49 die Fixierung und gibt das Gießformteil 45 frei. Das Gießformteil 45 ist im vorliegenden Beispiel mit Magneten 55 versehen und das Gießformteil 46 mit Magneten 56, die gemeinsam das freigegebene Gießformteil 45 an dem anderen noch fixierten Gießformteil 46 aneinander ziehen und positionieren. Die Positionierung erfolgt hauptsächlich durch Positionierstifte und komplementäre Positionieröffnungen sowie auch durch die Halteeinrichtungen 53 und 54 der Schwenkaufnahmen 49 bzw. 50. Das Gießformteil 45 ist mit Teilkavitäten 57 und das Gießformteil 46 mit Teilkavitäten 58 versehen, die in der Zwischenposition paarweise in Überdeckung gebracht sind. Jedes Paar geschlossener Teilkavitäten 57 und 58 bildet dann einen Formhohlraum für einen Süßwarenartikel.

Darüber hinaus ist eine Steuerungseinheit 59 vorgesehen, mit der sich die Bewegung der Gießformteile 45 und 46 steuern und eine dynamische Bewegung erzeugen lässt, wie oben anhand der Bewegungsprofile der Figuren 8, 9 und 10 erläutert.

In Fig. 12 ist eine Seitenansicht der Vorrichtung 43 gemäß Fig. 11 dargestellt sowie ein Transportmittel 60 das die mit Zuckermasse gefüllten Gießformteile 45 und 46 zuführt und an die Vorrichtung 43 übergibt. Nach Fig. 12 befinden sich die Schwenkaufnahmen 49 und 50 in einer horizontalen Position, so dass die Gießformteile 45 und 46 aus einer Gießmaschine kommend relativ zueinander immer noch in einer Ebene angeordnet sind, was deswegen als Gießposition PG bezeichnet wird. Das Gießformteil 45 ist mittels der Halteeinrichtung 53 an der Schwenkaufnahme 49 und das Gießformteil 46 gleichermaßen an der Schwenkaufnahme 50 fixiert. Aus der Gießposition PG werden die Gießformteile 45 und 46 gemäß der Pfeile 61 und 62 in die Zwischenposition PZ geschwenkt, die in Fig. 13 gezeigt ist. In der Zwischenposition PZ ist die Gießform 44 geschlossen und die Halteeinrichtung 53 des Gießformteils muss dann gelöst werden, während die Halteeinrichtung 54 das andere Gießformteil 46 und zusätzlich das Gießformteil 45 fixiert hält. Entlang des Pfeils 63 wird dann die geschlossene Gießform 44 in die Transportlage PT geschwenkt. In der Transportlage PT liegt dann das noch fixierte Gießformteil 46 unten und dessen Fixierung wird nun auch gelöst. Die Gießform 44 wird dann an ein Transportmittel 64 übergeben, mit dem die Gießform 44 abtransportierbar ist.

### Bezugszeichenliste

- 1: Gießform
- 2: Gießformteil
- 3: Gießformteil
- 4: Oberseite
- 5: Teilkavität
- 6: Pfeil
- 7: Pfeil
- 8: Formhohlraum
- 9: Pfeil
- 10: Außenwand
- 11: Unterseite
- 12: Steg
- 13: Steg
- 14: Steg
- 15: Gießformteil
- 16: Gießformteil
- 17: Teilkavität
- 18: Teilkavität
- 19: Zuckermasse
- 20: Formhohlraum
- 21: ringförmiger Rand
- 22: ringförmiger Rand
- 23: Querschnitt
- 24: Trennkeil
- 25: Trennfläche
- 26: Innenseite
- 27: Außenseite
- 28: Zuckermasse
- 29: Haufen
- 30: Oberfläche
- 31: zweiter Bestandteil
- 32: Gerade aufsteigend
- 33: Knick
- 34: Gerade abfallend
- 35: Gerade aufsteigend
- 36: Knick
- 37: Horizontale
- 38: Knick
- 39: Gerade abfallend
- 40: Gerade
- 41: Polynomfunktion
- 42: Maximum
- 43: Vorrichtung
- 44: Gießform
- 45: Gießformteil
- 46: Gießform
- 47: Handhabungseinheit
- 48: Schwenkeinrichtung
- 49: Schwenkaufnahme
- 50: Schwenkaufnahme
- 51: Schwenkantrieb
- 52: Schwenkantrieb
- 53: Halteeinrichtung
- 54: Halteeinrichtung
- 55: Magnet
- 56: Magnet
- 57: Teilkavität
- 58: Teilkavität
- 59: Steuereinheit
- 60: Transportmittel
- 61: Pfeil
- 62: Pfeil
- 63: Pfeil
- 64: Transportmittel

- Fₛ: Schwerkraft
- F_{T}: Trägheitskraft
- F_{Z}: Zentrifugalkraft
- G: Gießmaschine
- G1: Graph
- G2: Graph
- G3: Graph
- G4: Graph
- G5: Graph
- G6: Graph
- G7: Graph
- G8: Graph
- G9: Graph
- PG: Gießposition
- PT: Transportlage
- PZ: Zwischenposition
- Q: Zentrieröffnung
- T: Drehachse
- Z: Zentrierstift

## Patentansprüche

1. Verfahren zur Herstellung eines dreidimensionalen Süßwarenartikels aus wenigstens einer Zuckermasse (19, 28) mittels einer Gießform (1), die aus wenigstens zwei Gießformteilen (2, 3, 15, 16) zusammensetzbar ist, wobei jedes Gießformteil mindestens je eine Teilkavität (5, 17, 18) aufweist, mit der Maßgabe, dass sich die beiden Gießformteile (2, 3, 15, 16) in einen zusammengesetzten Zustand bringen lassen, in dem die beiden Teilkavitäten (5, 17, 18) einen gemeinsamen Formhohlraum (8, 20) ergeben, der dem Süßwarenartikel seine dreidimensionale Gestalt verleiht, wobei die beiden Gießformteile (2, 3, 15, 16) in einer geöffneten Gießposition (PG) angeordnet werden, in der die Teilkavitäten (5, 17, 18) nach oben offen angeordnet sind, dass in der Gießposition (PG) in beide Teilkavitäten (5, 17, 18) der Gießformteile (2, 3, 15, 16) ein Anteil der Zuckermasse (19, 28) des Süßwarenartikels eingegossen wird, dass die beiden Gießformteile (2, 3, 15, 16) anschließend zusammengelegt und in eine geschlossene Transportlage (PT) gebracht werden, in der die Gießform horizontal angeordnet ist, wobei die Oberseite (4) eines Gießformteils (2, 3, 15, 16) mit der Oberseite des anderen Gießformteils (2, 3, 15, 16) in Kontakt gelangt und die Teilkavitäten (5, 17, 18) der beiden Gießformteile (2, 3, 15, 16) in Überdeckung gekommen sind und den gemeinsamen Formhohlraum (8, 20) bilden , wobei die Gießform als wiederverwendbare Dauerform ausgebildet ist, **dadurch gekennzeichnet, dass** die beiden Gießformteile (2, 3, 15, 16) der Dauerform nach dem Eingießen der Zuckermasse (19, 28) zunächst aus der geöffneten Gießposition (PG) in einem Zwischenschritt in eine geschlossene Zwischenposition (PZ) bewegt werden, dass in der geschlossenen Zwischenposition (PZ) die Teilkavitäten (5, 17, 18) der beiden Gießformteile (2, 3, 15, 16) bereits in Überdeckung gebracht werden und der gemeinsame Formhohlraum (8, 20) gebildet wird, und dass die Gießform dann aus der geschlossenen Zwischenposition (PZ) in einem zweiten Schritt bis in die horizontale Transportlage (PT) bewegt wird.

2. Verfahren nach Anspruch 1, **dadurch gekennzeichnet, dass** die Schließbewegung zum Zusammenlegen der beiden Gießformteile (2, 3, 15, 16) bis in die Zwischenposition (PZ) zeitgesteuert ausgeführt wird, und dass eine beschleunigte und eine verzögerte Bewegungsphase bis zur Erreichung der Zwischenposition (PZ) ausgeführt werden, wobei die Schließbewegung am Beginn des Zwischenschritts aus der Gießposition (PG) heraus beschleunigt und vor dem in Kontaktkommen der Oberseiten (4) der Gießformteile (2, 3, 15, 16) verzögert ausgeführt wird.

3. Verfahren nach Anspruch 1 oder 2, **dadurch gekennzeichnet, dass** während der Schließbewegung die Gießformteile (2, 3, 15, 16) symmetrisch um eine Drehachse (T) aufeinander zu gedreht werden bis in die Zwischenposition (PZ).

4. Verfahren nach einem der Ansprüche 1 bis 3,
**dadurch gekennzeichnet, dass** die Schließbewegung der Gießformteile (2, 3, 15, 16) bis in die Zwischenposition (PZ) so schnell durchgeführt wird, dass eingegossene Zuckermassen (19, 28) in den beiden Teilkavitäten (5, 17, 18) sich noch miteinander verbinden können, wenn die Teilkavitäten (5, 17, 18) in Überdeckung gebracht worden sind und die Gießform (1) geschlossen ist.

5. Verfahren nach Anspruch 4, **dadurch gekennzeichnet, dass** die Schließbewegung bis zur Erreichung der Zwischenposition (PZ), in der die Teilkavitäten (5, 17, 18) der Gießformteile (2, 3, 15, 16) in Überdeckung gebracht sind, innerhalb einer Verschlusszeit ausgeführt werden, die im Bereich von 0,1 bis 3 Sekunden liegt.

6. Verfahren nach Anspruch 4 oder 5, **dadurch gekennzeichnet, dass** die Schwenkbewegung der Gießform (1) von der Zwischenposition (PZ) in die Transportlage (PT) innerhalb einer Ablagezeit ausgeführt wird, die im Bereich von 0,1 bis 3 Sekunden liegt.

7. Verfahren nach einem der Ansprüche 1 bis 6,
**dadurch gekennzeichnet, dass** wenigstens in eine Teilkavität (5, 17, 18) eines Gießformteils (2, 3, 15, 16) zwei unterschiedliche Zuckermassen (19, 28, 31) gegossen werden, und dass die unterschiedlichen Zuckermassen (19, 28, 31) nebeneinander oder übereinander in die Teilkavität (5, 17, 18) gegossen werden.

8. Verfahren nach einem der Ansprüche 1 bis 7,
**dadurch gekennzeichnet, dass** die Zuckermasse (19, 28, 31) in Abhängigkeit ihrer Zusammensetzung mit einer Gießtemperatur in einem bestimmten Temperaturbereich in die Teilkavitäten (5, 17, 18) der Gießformteile (2, 3, 15, 16) hineingegossen wird, nämlich:
- Pektin-Gelee 70 - 100°C,
- Gelatine 50 - 90°C, bevorzugt 65 - 75°C,
- Carrageen 90 - 110°C, bevorzugt 100 - 110°C sowie
- Agar 35 - 70°C, bevorzugt 45 - 55°C,
- Hartkaramelle 80 - 150°C, bevorzugt 120-140°C,
- Toffee oder Weichkaramelle 80 - 120°C, bevorzugt 90 - 110°C.

9. Vorrichtung zur Herstellung eines dreidimensionalen Süßwarenartikels nach einem Verfahren der vorhergehenden Ansprüche, umfassend wenigstens eine Gießform (1), die wenigstens zwei zusammensetzbare Gießformteile (2, 3, 15, 16) aufweist, wobei jedes der Gießformteile (2, 3, 15, 16) mit wenigstens einer Teilkavität (5, 17, 18) versehen ist, wobei die Teilkavitäten (5, 17, 18), wenn sie in Überdeckung gebracht sind, einen Formhohlraum (8, 20) bilden, sowie umfassend eine Handhabungseinheit mit einer Halteeinrichtung für wenigstens eines der Gießformteile (2, 3, 15, 16) und mit einer Schwenkeinrichtung mit der das Gießformteil (2, 3, 15, 16) bewegbar ist, **dadurch gekennzeichnet, dass** eine Steuerungseinheit vorgesehen ist, mit der die Bewegungsdynamik für die Schließbewegung der Gießformteile (2, 3, 15, 16) aus der Gießposition (PG) in die Zwischenposition (PZ) sowie die Bewegungsdynamik für die Schwenkbewegung der Gießformteile (2, 3, 15, 16) aus der Zwischenposition in die Transportlage (PT) steuerbar ist.

10. Vorrichtung nach Anspruch 9, **dadurch gekennzeichnet, dass** wenigstens ein Gießformteil (2, 3, 15, 16) an seiner Oberseite (4) einen ringförmigen Rand (21, 22) aufweist, der die Teilkavität (5, 17, 18) umfängt und an der Oberseite (4) hervorsteht.

11. Vorrichtung nach Anspruch 10, **dadurch gekennzeichnet, dass** der ringförmige Rand (21, 22) als Trennkeil (24) ausgebildet ist.

12. Vorrichtung nach einem der Ansprüche 9 bis 11,
**dadurch gekennzeichnet, dass** die Gießform (2, 3, 15, 16) mit Positioniermitteln versehen ist, um die beiden Gießformteile (2, 3, 15, 16) relativ zueinander auszurichten, wenn deren Oberseiten miteinander in Kontakt kommen.

13. Vorrichtung nach Anspruch 12, **dadurch gekennzeichnet, dass** als Positioniermittel Magnete oder Zentrierstifte (Z) und komplementäre Zentrieröffnungen (Q) vorgesehen sind.

14. Vorrichtung nach einem der Ansprüche 1 bis 13,
**dadurch gekennzeichnet, dass** wenigstens eines der Gießformteile (2, 3, 15, 16) als Dauerform aus einem unelastischen Kunststoff ausgeführt ist, wie Polycarbonat oder einem seiner Copolymere.

## Claims

1. A method for producing a three-dimensional confectionery item from at least one sugar mass (19, 28) using a casting mould (1), which can be assembled from at least two casting mould parts (2, 3, 15, 16), wherein each casting mould part has at least one partial cavity (5, 17, 18), with the proviso that the two casting mould parts (2, 3, 15, 16) can be brought into an assembled state in which the two partial cavities (5, 17, 18) produce a common mould cavity (8, 20) which gives the confectionery item its three-dimensional shape, wherein the two casting mould parts (2, 3, 15, 16) are arranged in an open casting position (PG) in which the partial cavities (5, 17, 18) are arranged so as to be open at the top, that, in the casting position (PG), a portion of the sugar mass (19, 28) of the confectionery item is poured into both partial cavities (5, 17, 18) of the casting mould parts (2, 3, 15, 16), that the two casting mould parts (2, 3, 15, 16) are then put together and brought into a closed transport position (PT) in which the casting mould is arranged horizontally, wherein the upper side (4) of one casting mould part (2, 3, 15, 16) comes into contact with the upper side of the other casting mould part (2, 3, 15, 16) and the partial cavities (5, 17, 18) of the two casting mould parts (2, 3, 15, 16) have lined up and form the common mould cavity (8, 20), wherein the casting mould is formed as a reusable permanent mould **characterized in that** after the sugar mass (19, 28) has been poured in, the two casting mould parts (2, 3, 15, 16) of the permanent mould are moved first of all from the open casting position (PG) into a closed intermediate position (PZ) in an intermediate step, **in that**, in the closed intermediate position (PZ), the partial cavities (5, 17, 18) of the two casting mould parts (2, 3, 15, 16) are already lined up and the common mould cavity (8, 20) is formed, and **in that**, in a second step, the casting mould is then moved from the closed intermediate position (PZ) into the horizontal transport position (PT) .

2. The method according to claim 1, wherein the closing movement for putting the two casting mould parts (2, 3, 15, 16) together into the intermediate position (PZ) is performed in a time-controlled manner such that an accelerated and a decelerated movement phase are performed until the intermediate position (PZ) is reached, wherein the closing movement is performed accelerated at the start of the intermediate step out of the casting position (PG) and is performed decelerated before the upper sides (4) of the casting mould parts (2, 3, 15, 16) come into contact.

3. The method according to claim 1 or 2, wherein, during the closing movement, the casting mould parts (2, 3, 15, 16) are rotated towards one another symmetrically about an axis of rotation (T) into the intermediate position (PZ).

4. The method according to one of claims 1 to 3, wherein the closing movement of the casting mould parts (2, 3, 15, 16) into the intermediate position (PZ) is carried out so quickly that poured-in sugar masses (19, 28) in the two partial cavities (5, 17, 18) can still join to one another when the partial cavities (5, 17, 18) have been lined up and the casting mould (1) is closed.

5. The method according to claim 4, wherein the closing movement until reaching the intermediate position (PZ), in which the partial cavities (5, 17, 18) of the casting mould parts (2, 3, 15, 16) are brought into overlapping, is performed within a closing time which is in the range of 0.1 to 3 seconds.

6. The method according to claim 4 or 5, wherein the pivoting movement of the casting mould (1) from the intermediate position (PZ) into the transport position (PT) is performed within a depositing time which lies in the range of from 0.1 to 3 seconds.

7. The method according to one of claims 1 to 6, wherein two different sugar masses (19, 28, 31) are poured into at least one partial cavity (5, 17, 18) of a casting mould part (2, 3, 15, 16), and in that the different sugar masses (19, 28, 31) are poured into the partial cavity (5, 17, 18) next to one another or one on top of the other.

8. The method according to one of claims 1 to 7, wherein the sugar mass (19, 28, 31) is poured into the partial cavities (5, 17, 18) of the casting mould parts (2, 3, 15, 16) at a pouring temperature in a particular temperature range, depending on its composition, namely:
- pectin gel 70 - 100°C,
- gelatin 50 - 90°C,
- carrageenan 90 - 110°C,
- agar 35 - 70°C,
- hard caramel 80 - 150°C,
- toffee or soft caramel 80 - 120°C.

9. The device for producing a three-dimensional confectionery item according to a method of the preceding claims, the device comprising at least one casting mould (1) having at least two casting mould parts (2, 3, 15, 16) which can be assembled, wherein each of the casting mould parts (2, 3, 15, 16) is provided with at least one partial cavity (5, 17, 18), wherein, when they are lined up, the partial cavities (5, 17, 18) form a mould cavity (8, 20), and comprising a handling unit including a holding mechanism for at least one of the casting mould parts (2, 3, 15, 16), and including a pivoting mechanism with which the casting mould part (2, 3, 15, 16) is movable, **characterized in that** a control unit is provided, with which the movement dynamics for the closing movement of the casting mould parts (2, 3, 15, 16) from the casting position (PG) into the intermediate position (PZ) and the movement dynamics for the pivoting movement of the casting mould parts (2, 3, 15, 16) from the intermediate position into the transport position (PT) can be controlled.

10. The device according to claim 9, **characterized in that** at least one casting mould part (2, 3, 15, 16) has on its upper side (4) an annular rim (21, 22) which surrounds the partial cavity (5, 17, 18) and protrudes at the upper side (4).

11. The device according to claim 10, **characterized in that** the annular rim (21, 22) is formed as a separating wedge (24).

12. The device according to one of claims 9 to 11, **characterized in that** the casting mould (2, 3, 15, 16) is provided with positioning means in order to align the two casting mould parts (2, 3, 15, 16) relative to one another when the upper sides thereof come into contact with one another.

13. The device according to claim 12, **characterized in that** magnets or centering pins (Z) and complementary centering openings (Q) are provided as positioning means.

14. The device according to one of claims 1 to 13, **characterized in that** at least one of the casting mould parts (2, 3, 15, 16) is realized as a permanent mould made of a rigid plastic, such as polycarbonate or one of its copolymers.

## Revendications

1. Procédé de fabrication d'un article de confiserie tridimensionnel à partir d'au moins une pâte à sucre (19, 28) au moyen d'un moule de coulée (1), qui est assemblable à partir d'au moins deux parties de moule de coulée (2, 3, 15, 16), chaque partie du moule de coulée présentant chacune au moins une cavité partielle (5, 17, 18), sous réserve que les deux parties du moule de coulée (2, 3, 15, 16) peuvent être amenées dans un état assemblé dans lequel les deux cavités partielles (5, 17, 18) donnent une cavité de moule commune (8, 20) qui confère à l'article de confiserie sa conformation tridimensionnelle, les deux parties du moule de coulée (2, 3, 15, 16) étant disposées dans une position de coulée ouverte (PG) dans laquelle les cavités partielles (5, 17, 18) sont disposées ouvertes vers le haut, que dans la position de coulée (PG) une partie de la pâte à sucre (19, 28) de l'article de confiserie est versée dans les deux cavités partielles (5, 17, 18) des parties du moule de coulée (2, 3, 15, 16), que les deux parties du moule de coulée (2, 3, 15, 16) sont ensuite réunies et amenées dans une position de transport fermée (PT) dans laquelle le moule de coulée est disposé horizontalement, la face supérieure (4) d'une partie du moule de coulée (2, 3, 15, 16) entrant en contact avec la face supérieure de l'autre partie du moule de coulée (2, 3, 15, 16) et les cavités partielles (5, 17, 18) des deux parties du moule de coulée (2, 3, 15, 16) ont été mises en recouvrement et constituent la cavité de moule commune (8, 20), le moule de coulée étant conformé comme moule permanent réutilisable, **caractérisé en ce qu'**après le versement de la pâte à sucre (19, 28), les deux parties (2, 3, 15, 16) du moule permanent sont d'abord amenées, dans une étape intermédiaire, de la position de coulée ouverte (PG) à une position intermédiaire fermée (PZ), que dans la position intermédiaire fermée (PZ), les cavités partielles (5, 17, 18) des deux parties du moule de coulée (2, 3, 15, 16) sont déjà mises en recouvrement et que la cavité de moule commune (8, 20) est constituée et que le moule de coulée est ensuite amené, dans une deuxième étape, de la position intermédiaire fermée (PZ) à la position de transport horizontale (PT) .

2. Procédé selon la revendication 1, **caractérisé en ce que** le mouvement de fermeture destiné à réunir les deux parties du moule de coulée (2, 3, 15, 16) jusqu'à la position intermédiaire (PZ) est effectué de manière commandée dans le temps et qu'une phase de mouvement accélérée et une phase de mouvement retardée sont effectuées jusqu'à l'atteinte de la position intermédiaire (PZ), le mouvement de fermeture étant effectué de manière accélérée au début de la phase intermédiaire à partir de la position de coulée (PG) et de manière retardée avant l'entrée en contact des parties supérieures (4) des parties du moule de coulée (2, 3,15, 16) .

3. Procédé selon la revendication 1 ou 2, **caractérisé en ce que** pendant le mouvement de fermeture, les parties du moule de coulée (2, 3, 15, 16) sont pivotées l'une vers l'autre autour d'un axe de rotation (T) jusqu'à la position intermédiaire (PZ).

4. Procédé selon l'une des revendications 1 à 3, **caractérisé en ce que** le mouvement de fermeture des parties du moule de coulée (2, 3, 15, 16) jusqu'à la position intermédiaire (PZ) est effectué si rapidement que les pâtes à sucre versées (19, 28) dans les deux cavités partielles (5, 17, 18) peuvent encore s'assembler entre elles quand les cavités partielles (5, 17, 18) ont été mises en recouvrement et que le moule de coulée (1) est fermé.

5. Procédé selon la revendication 4, **caractérisé en ce que** le mouvement de fermeture jusqu'à l'atteinte de la position intermédiaire (PZ) dans laquelle les cavités partielles (5, 17, 18) des parties du moule de coulée (2, 3, 15, 16) ont été mises en recouvrement est effectué en un temps de fermeture compris entre 0,1 et 3 secondes.

6. Procédé selon la revendication 4 ou 5, **caractérisé en ce que** le mouvement de pivotement du moule de coulée (1) de la position intermédiaire (PZ) à la position de transport (PT) est effectué en un temps de dépose compris entre 0,1 et 3 secondes.

7. Procédé selon l'une des revendications 1 à 6, **caractérisé en ce que** deux pâtes à sucre différentes (19, 28, 31) sont coulées dans au moins une cavité partielle (5, 17, 18) d'une partie du moule de coulée (2, 3, 15, 16) et que les pâtes à sucre différentes (19, 28, 31) sont coulées l'une à côté de l'autre ou l'une sur l'autre dans la cavité partielle (5, 17, 18).

8. Procédé selon l'une des revendications 1 à 7, **caractérisé en ce que** la pâte à sucre (19, 28, 31) est versée dans les cavités partielles (5, 17, 18) des parties du moule de coulée (2, 3, 15, 16) à une température de coulée comprise dans une certaine plage de température en fonction de sa composition, à savoir :
- gelée de pectine 70 - 100°C,
- gélatine 50 - 90 °C, de préférence 65 - 75 °C,
- carraghénane 90 - 110 °C, de préférence 100 - 110 °C et
- agar 35 - 70°C, de préférence 45 - 55 °C,
- caramel dur 80 - 150 °C, de préférence 120 - 140 °C,
- toffee ou caramel mou 80 - 120 °C, de préférence 90 - 110 °C.

9. Dispositif de fabrication d'un article de confiserie tridimensionnel selon un procédé conforme aux revendications précédentes, comprenant au moins un moule de coulée (1), qui présente au moins deux parties de moule de coulée assemblables (2, 3, 15, 16), chacune des parties du moule de coulée (2, 3, 15, 16) étant munie d'au moins une cavité partielle (5, 17, 18), les cavités partielles (5, 17, 18) constituant, quand elles sont mises en recouvrement, une cavité de moule (8, 20), ainsi que comprenant une unité de manipulation avec un dispositif de maintien pour au moins une des parties du moule de coulée (2, 3, 15, 16) et avec un dispositif de pivotement avec lequel la partie du moule de coulée (2, 3, 15, 16) est déplaçable, **caractérisé en ce qu'**est prévue une unité de pilotage avec laquelle la dynamique de mouvement pour le mouvement de fermeture des parties du moule de coulée (2, 3, 15, 16) de la position de coulée (PG) à la position intermédiaire (PZ) et la dynamique de mouvement pour le mouvement de pivotement des parties du moule de coulée (2, 3, 15, 16) de la position intermédiaire à la position de transport (PT) sont pilotables.

10. Dispositif selon la revendication 9, **caractérisé en ce qu'**au moins une partie du moule de coulée (2, 3, 15, 16) présente sur sa face supérieure (4) un bord annulaire (21, 22) qui entoure la cavité partielle (5, 17, 18) et dépasse sur la face supérieure (4).

11. Dispositif selon la revendication 10, **caractérisé en ce que** le bord annulaire (21, 22) est conformé comme cale de séparation (24).

12. Dispositif selon l'une des revendications 9 à 11, **caractérisé en ce que** le moule de coulée (2, 3, 15, 16) est muni de moyens de positionnement destinés à orienter les deux parties du moule de coulée (2, 3, 15, 16) relativement l'une par rapport à l'autre quand leurs faces supérieures entrent en contact entre elles.

13. Dispositif selon la revendication 12, **caractérisé en ce que** sont prévus comme moyens de positionnement des aimants ou des broches de centrage (Z) et des orifices de centrage complémentaires (Q).

14. Dispositif selon l'une des revendications 1 à 13, **caractérisé en ce qu'**au moins une des parties du moule de coulée (2, 3, 15, 16) est conformée comme moule permanent en matière plastique non élastique, comme le polycarbonate ou un de ses copolymères.
